# EUROPEAN PATENT APPLICATION

(11) **EP 2 458 452 A1**
(43) Date of publication of application: **30.05.2012**
(21) Application number: 11009114.7
(22) Date of filing: 17.11.2011
(51) Int. Cl.: G03H 1/00, G03H 1/02, B42D 15/10

(54) **Hologram laminate and method of manufacturing hologram laminate**

(30) Priority: 24.11.2010 JP 2010260910
(71) Applicant: Sony Corporation, Tokyo 108-0075 (JP); SONY DADC Corporation, Shinagawa-ku Tokyo 141-0001 (JP)
(72) Inventor: Sugiura, Yoshihiro, Shinagawa-ku Tokyo 141-0001 (JP); Shirakura, Akira, Shinagawa-ku Tokyo 141-0001 (JP)
(74) Representative: Müller - Hoffmann & Partner

(57) **Abstract**

A hologram laminate is provided with a hologram recording layer (11) in which holograms are recorded, a first bonding layer (21), a pattern layer (41) having a first region (R1) and a second region (R2), and a second bonding layer (22). The hologram recording layer, the first bonding layer, the pattern layer, and the second bonding layer are laminated in this order. Detaching strength of the first bonding layer is larger than detaching strength of the second bonding layer. The detaching strength of the second bonding layer with respect to the first region and the detaching strength of the second bonding layer with respect to the second region are different.

## Description

### BACKGROUND

The present disclosure relates to a hologram laminate and a method of manufacturing the hologram laminate. Particularly, the present disclosure relates to a hologram laminate that can determine whether or not the hologram laminate has been detached from an adherend and a method of manufacturing the hologram laminate.

In recent years, there has been an increasing demand for protection of private information or assurance of the authenticity of products.

For example, forgery and illegal use of identification cards and the like bring about loss of credit or pecuniary damages before the owners realize them such that the owners whose identification cards and the like are forged suffer financial damages. For example, if illegal replica products are distributed in markets, the original manufacturers suffer an economic loss. In addition, when the replica products have inferior qualities, such as unguaranteed safety of the products, there are risks of not only bringing about the loss of credit in business, but also threatening consumers' health or lives.

In cards, identification cards, and the like having important information recorded therein, for example, a hologram capable of stereoscopic display is used for the purpose of supplying an authenticity verification function and a forgery-prevention function. In recent years, a volume hologram that records interruption patterns as the difference of the refractive index inside a recording layer has been frequently used. This is because manufacturing of recording images uses advanced techniques, and recording materials for forging volume holograms are difficult to purchase.

However, even when a hologram itself is difficult to forge, it can be considered that a true hologram may be detached from the original adherend and attached to a separate adherend. Then, it becomes difficult to determine whether or not a forgery is made only using the hologram attached to the adherend.

On the other hand, for example, a falsification-prevention seal is attached to an opening portion in order to assure that the product is not falsified or opened until the product is delivered to the hands of a consumer from the manufacturer or the producer. Such a falsification-prevention seal is made to leave letters or shapes on an adherend once being detached. Therefore, consumers can easily determine whether or not there is a possibility that the product has been falsified or opened.

From the above facts, a hologram desirably has a function that can determine whether or not the hologram has been detached from an adherend. For example, Japanese Unexamined Patent Application Publication No. 2008-298988 below suggests a falsification prevention adhering label in which a hologram is attached to an adherend via a resin layer provided with a half cut portion so that the hologram is broken along the contour shape of the half cut when it is attempted to detach the hologram.

However, when a hologram is supplied with a falsification prevention function, the layer structure of a hologram laminate becomes complicated, and the manufacturing process becomes complicated. In addition, the hologram laminate becomes thick, and it is difficult to manufacture a hologram laminate having a thickness of, for example, 150 µm or less.

### SUMMARY

It is desirable to provide a hologram laminate that can determine whether or not the hologram laminate has been detached from an adherend and a method of manufacturing the hologram laminate.

A first preferred embodiment of the hologram laminate is as follows:
A hologram laminate is provided with a hologram recording layer in which holograms are recorded; a first bonding layer; a pattern layer having a first region and a second region; and a second bonding layer; in which the hologram recording layer, the first bonding layer, the pattern layer, and the second bonding layer are laminated in this order, detaching strength of the first bonding layer is larger than detaching strength of the second bonding layer, and the detaching strength of the second bonding layer with respect to the first region and the detaching strength of the second bonding layer with respect to the second region are different.

Another preferred embodiment of the hologram laminate is as follows:
A hologram laminate is provided with a hologram recording layer in which holograms are recorded; a first bonding layer; a pattern layer having a first region and a second region; and a second bonding layer, in which the hologram recording layer, the first bonding layer, the pattern layer, and the second bonding layer are laminated in this order, detaching strength of the first bonding layer with respect to the hologram recording layer is larger than the detaching strength of the first bonding layer with respect to the first region of the pattern layer, and the detaching strength of the first bonding layer with respect to the first region of the pattern layer is larger than the self-gathering force or rupture strength of the pattern layer.

A preferred embodiment of the method of manufacturing the hologram laminate is as follows:
A method of manufacturing the hologram laminate is provided with a joining process in which a first laminate provided with a hologram recording layer in which holograms are recorded; and a second laminate provided with a first bonding layer; a pattern layer having a first region and a second region; and a second bonding layer, in which the first bonding layer, the pattern layer, and the second bonding layer are laminated in this order, are joined by the first bonding layer, in which detaching strength of the first bonding layer is larger than detaching strength of the second bonding layer, and the detaching strength of the second bonding layer with respect to the first region and the detaching strength of the second bonding layer with respect to the second region are different.

Another preferred embodiment of the method of manufacturing the hologram laminate is as follows:
A method of manufacturing the hologram laminate is provided with a joining process in which a first laminate provided with a hologram recording layer in which holograms are recorded; and a second laminate provided with a first bonding layer; a pattern layer having a first region and a second region; and a second bonding layer, in which the first bonding layer, the pattern layer, and the second bonding layer are laminated in this order, are joined by the first bonding layer, in which detaching strength of the first bonding layer with respect to the hologram recording layer is larger than the detaching strength of the first bonding layer with respect to the first region of the pattern layer, and the detaching strength of the first bonding layer with respect to the first region of the pattern layer is larger than the self-gathering force or rupture strength of the pattern layer.

The hologram recording layer, the first bonding layer, the pattern layer, and the second bonding layer are laminated in this order, and the detaching strength of the first bonding layer is larger than the detaching strength of the second bonding layer in the hologram laminate. In addition, the detaching strength of the second bonding layer with respect to the first region and the detaching strength of the second bonding layer with respect to the second region are different. Therefore, when an attempt is made to detach the hologram recording layer, the second bonding layer is detached or ruptured before the first bonding layer is detached or ruptured, and the second bonding layer leaves a pattern shape on an adherend.

Here, the fact that the detaching strength of the second bonding layer with respect to the first region and the detaching strength of the second bonding layer with respect to the second region are different specifically refers to a difference of the detaching strength by 0.1 N or more as measured based on, for example, JIS Z0237-2000.

The hologram recording layer, the first bonding layer, the pattern layer, and the second bonding layer are laminated in this order, and the detaching strength of the first bonding layer with respect to the hologram recording layer is larger than the detaching strength of the first bonding layer with respect to the first region of the pattern layer in the hologram laminate. In addition, the detaching strength of the first bonding layer with respect to the first region of the pattern layer is larger than the self-gathering force or rupture strength of the pattern layer. Therefore, when an attempt is made to detach the hologram recording layer, the first region of the pattern layer is ruptured before the first bonding layer is detached or ruptured. That is, at least a part of the pattern layer remains in the detached hologram recording layer side.

The first bonding layer is preferably an ultraviolet-curable resin. This is because the thickness of the hologram laminate can be configured to be thin.

Preferably, the hologram laminate is further provided with a base material layer. This is because the pattern layer can be formed on at least one main surface of the main surfaces of the base material layer.

The second bonding layer is preferably black. This is because the contrast of a hologram image can be improved, and the hologram can be easily observed without providing a black sheet.

The first bonding layer or the base material layer preferably includes a diffusion and reflection member. Alternately, the first region is formed by coating or printing an ink composition including particles that reflect light. This is because the authenticity of the hologram laminate can be easily determined since the image of the diffusion and reflection member is recorded in a copied hologram even when the hologram recording layer is detached, and the hologram is illegally copied.

The base material layer preferably has a patterned optical anisotropy. Alternately, the absolute refractive index of the first bonding layer is larger than the absolute refractive index of the first region by 0.05 or more. This is because the authenticity of the hologram laminate can be easily determined since a mirror image (hologram mirror) is recorded in a copied hologram even when the hologram recording layer is detached, and the hologram is illegally copied.

The method of manufacturing the hologram laminate is provided with a joining process in which the first laminate provided with the hologram recording layer in which holograms are recorded and the second laminate in which the first bonding layer, the pattern layer, and the second bonding layer are laminated in this order are joined by the first bonding layer. Therefore, the thickness of the hologram laminate can be configured to be thin. It is preferable that a cover film be further provided to the first laminate, and the first laminate be supplied in a state in which the cover film and the hologram recording layer are laminated in advance.

It is preferable that the method of manufacturing the hologram laminate be further provided with a hologram recording process in which a hologram is recorded in the hologram recording layer, in which the hologram recording process and the joining process are configured to be inline. Alternately, the method of manufacturing the hologram laminate is further provided with a hologram recording layer forming process in which the hologram recording layer is formed by coating a photosensitive material on the cover film, and the hologram recording layer forming process, the hologram recording process, and the joining process are configured to be inline. The inline configuration of each of the processes suppresses complication of the manufacturing process of the hologram laminate.

According to at least one of the embodiments, it is possible to provide a hologram laminate that can determine whether or not the hologram has been detached from an adherend without complicating the manufacturing process.

Various respective aspects and features of the invention are defined in the appended claims.

### BRIEF DESCRIPTION OF THE DRAWINGS

Embodiments of the invention will now be described with reference to the accompanying drawings, throughout which like parts are referred to by like references, and in which:
Fig. 1A is a schematic cross-sectional view of a configuration example of the hologram laminate according to the first embodiment. Fig. 1B is a schematic cross-sectional view showing the state of an adherend when the hologram laminate according to the first embodiment is attached to an adherend, and then detached. Fig. 1C is a view for explaining the falsification prevention function of the hologram laminate according to the first embodiment.
Figs. 2A to 2C are simplified line drawings showing the photosensitive process of a light-curable photopolymer.
Figs. 3A and 3B are simplified line drawings used for explaining the first laminate of the hologram laminate according to the first embodiment.
Figs. 4A to 4D are simplified line drawings used for explaining the hologram recording process.
Figs. 5A to 5C are schematic cross-sectional views showing a laminate structure in each of the processes.
Fig. 6 is a simplified line drawing used for explaining the joining process in which the first laminate and the second laminate are joined.
Figs. 7A and 7B are simplified line drawings used for explaining the hologram recording layer forming process.
Fig. 8A is a schematic cross-sectional view of a configuration example of the hologram laminate according to the second embodiment. Fig. 8B is a schematic cross-sectional view for explaining a state in which the hologram laminate according to the second embodiment is detached from an adherend.
Fig. 9A is a schematic cross-sectional view showing a configuration example of the hologram laminate according to the third embodiment. Fig. 9B is a schematic cross-sectional view showing a first modified example of the hologram laminate according to the third embodiment.
Figs. 10A and 10B are schematic cross-sectional views showing a second modified example of the hologram laminate according to the third embodiment.
Fig. 11A is a schematic cross-sectional view showing a configuration example of the hologram laminate according to the fourth embodiment. Fig. 11B is a schematic cross-sectional view showing a configuration example of the hologram laminate according to the fifth embodiment. Fig. 11C is a schematic cross-sectional view showing another configuration example of the hologram laminate according to the fifth embodiment.
Fig. 12A is a schematic cross-sectional view of a hologram laminate having a tamper-evident function between the first bonding layer and the base material layer and between the base material layer and the second bonding layer. Fig. 12B is a view for explaining the falsification prevention function of the hologram laminate shown in Fig. 12A.

### DETAILED DESCRIPTION OF EMBODIMENTS

Hereinafter, the embodiments of the hologram laminate and the method of manufacturing the hologram laminate will be described. Meanwhile, the description will be made in the following order.

### <1. First embodiment>

### [Hologram laminate]

### [Method of manufacturing the hologram laminate]

### <2. Second embodiment>

### <3. Third embodiment>

### <4. Fourth embodiment>

### <5. Fifth embodiment>

### <6. Modified example>

Meanwhile, the embodiments described below are preferred specific examples of the hologram laminate and the method of manufacturing the hologram laminate. While a variety of technically preferred limitations will be added in the following description, the examples of the hologram laminate and the method of manufacturing the hologram laminate are not limited to the embodiments shown below unless an intention of particularly limiting the present disclosure is described.

### <1. First embodiment>

### [Hologram laminate]

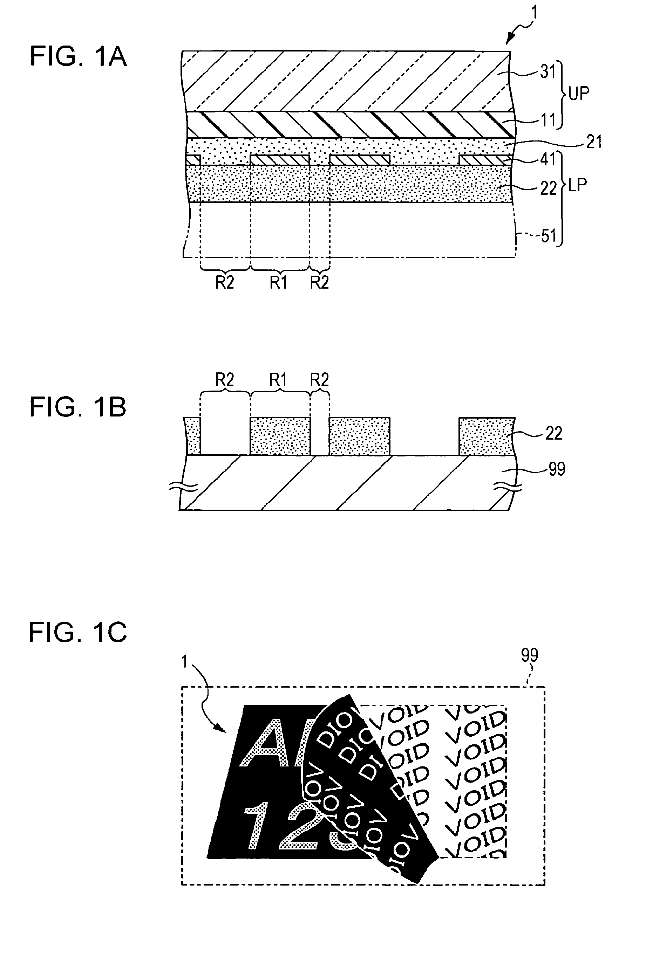

Fig. 1A is a schematic cross-sectional view showing a configuration example of the hologram laminate according to the first embodiment. Fig. 1B is a schematic cross-sectional view showing the state of an adherend when the hologram laminate according to the first embodiment is attached to the adherend and then detached. Fig. 1C is a view for explaining the falsification prevention function of the hologram laminate according to the first embodiment.

As shown in Fig. 1A, the hologram laminate 1 according to the first embodiment is provided with a hologram recording layer 11, a first bonding layer 21, a pattern layer 41, and a second bonding layer 22. In the configuration example of Fig. 1A, the hologram laminate 1 is provided with a cover film 31 on the main surface of the hologram recording layer 11 on the opposite side to the side facing the first bonding layer 21. In the configuration example of Fig. 1A, a separator 51 is provided on the second bonding layer 22 on the side where the hologram laminate 1 is attached to an adherend 99.

Holograms are recorded in the hologram recording layer 11. The recorded holograms are, for example, volume holograms. Naturally, embossed holograms that record interruption patterns as protrusions and recesses on the surface, diffraction lattices, and the like may be used. The detaching strength of the first bonding layer 21 is larger than the detaching strength of the second bonding layer 22. The pattern layer 41 has a first region R1 and a second region R2, and the detaching strength of the second bonding layer 22 with respect to the first region R1 and the detaching strength of the second bonding layer 22 with respect to the second region R2 are different as described below. For example, the detaching strength of the second bonding layer 22 with respect to the first region R1 is smaller than the detaching strength of the second bonding layer 22 with respect to the second region R2.

The second bonding layer 22 is detached or ruptured before the first bonding layer 21 is detached or ruptured as shown in Fig. 1B when an attempt is made to detach the hologram recording layer 11 with an effort for not breaking the hologram recording layer 11. For example, when the hologram laminate 1 is detached as shown in Fig. 1C, the second bonding layer 22 remains in a pattern shape, such as "VOID," with respect to the adherend. Since the second bonding layer 22 remains in a pattern shape on the adherend 99, the observer of the hologram laminate 1 can easily know that the hologram laminate 1 has been detached from the adherend 99. That is, the hologram laminate 1 is provided with a so-called tamper-evident function.

In addition, even when the once-detached hologram laminate 1 is attached to a separate adherend using an adhesive or the like, an air layer is interposed in a portion on the hologram recording layer 11 side where the second bonding layer 22 is lost, and the observed image becomes different from the image originally observed.

Here, the detaching strength mentioned in the present specification refers to the detaching strength as measured based on JIS Z0237-2000. A stainless steel (SUS-304) sheet whose surfaces are polished by 600-grit waterproof abrasive paper is used as a testing sheet, and the detaching strength is measured by detaching a test specimen from the testing sheet in a 180° direction. Hereinafter, the measurement conditions of the 180° detaching test will be shown.

### Measurement atmosphere: 23°C ± 2°C, 50 ± 5% RH

Test specimen: 25 mm wide

Attachment: one cycle of pressing by 2 kg rubber rollers

Attachment time: 24 hours after the attachment

Detachment angle: 180°

Detachment rate: 300 mm/min ± 30 mm/min

Hereinafter the hologram recording layer 11, the first bonding layer 21, the pattern layer 41, and the second bonding layer 22 will be described sequentially. Meanwhile, in the following description, bonding includes adhesion, and films include sheets.

### (Hologram recording layer)

The hologram recording layer 11 is, for example, a layer in which volume holograms are recorded. Examples of materials that compose the hologram recording layer 11 include photosensitive materials, such as light-curable resin materials, photo-crosslinking resin materials, silver salt materials, and dichromated gelatin. Preferable examples of the light-curable resin material that can be used include light-curable photopolymers since no special development treatment is carried out after lithographic exposure.

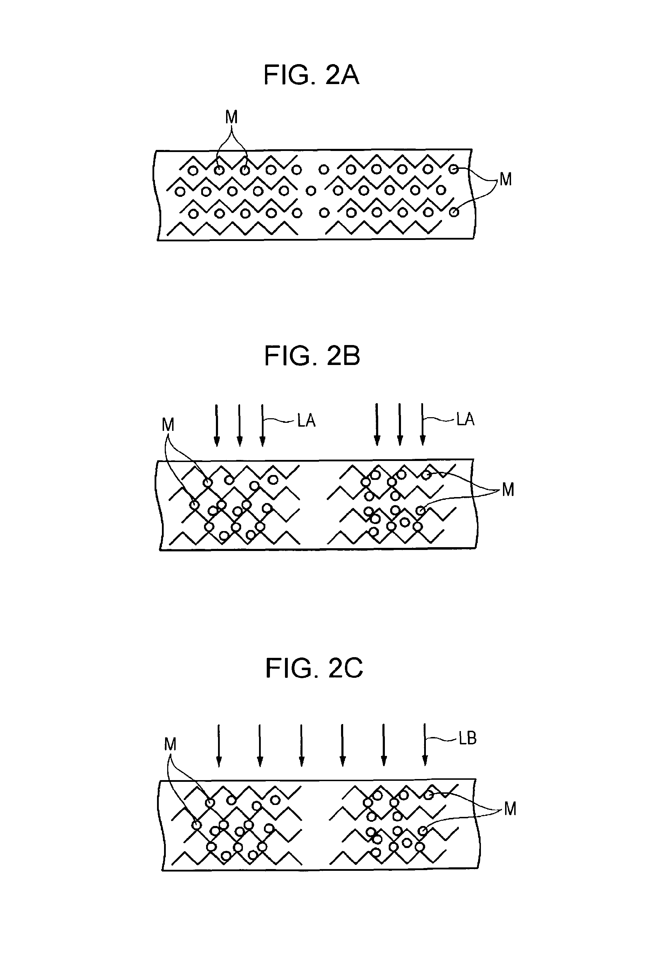

Figs. 2A to 2C are simplified line drawings showing the photosensitive process of a light-curable photopolymer. In the initial state, monomers M are evenly dispersed in a matrix polymer as shown in Fig. 2A. In contrast to the above, the monomers M are polymerized in the exposed portion when about 10 mj/cm² to 400 mJ/cm² light LA is irradiated as shown in Fig. 2B. In addition, as the polymerization proceeds, the monomers M move from the periphery, and the concentration of the monomers M varies according to the place, thereby causing refractive index modulation. After that, the polymerization of the monomers M is completed by irradiating about 1000 mJ/cm² of ultraviolet rays or visible light LB to the entire surface as shown in Fig. 2C. As such, the refractive index of the light-curable photopolymer varies with the incident light, and therefore interruption patterns generated by the interruption between reference light and object light can be recorded as variation in the refractive index.

Meanwhile, the cover film 31 shown in Fig. 1A is a surface protective layer that protects the hologram recording layer 11. The cover film 31 is provided in order to prevent flaws, prevent static charge, form a film shape, and stabilize a hologram shape. Examples of materials that compose the cover film 31 include polyethylene terephthalate, polycarbonate, and the like. When volume holograms are recorded in the hologram recording layer 11, it is preferable that the birefringence of a material that composes the cover film 31 be sufficiently small, and the optical refractive index of a material that composes the cover film 31 is almost the same as those of photosensitive materials. This is because the cover film 31 does not act as a drag during the observation of holograms.

### (First bonding layer)

The first bonding layer 21 is a bonding layer for joining an upper portion UP that includes the cover film 31 shown in Fig. 1A and the hologram recording layer 11 and a lower portion LP that includes the pattern layer 41, the second bonding layer 22, and the separator 51.

The first bonding layer 21 is a layer composed of, for example, a bonding agent. Examples of the bonding agent include energy ray-curable, thermosetting, or pressure-sensitive bonding agents.

The energy ray-curable bonding agents contain an energy ray-curable compound and a polymerization initiator. Examples of energy rays that can be used include electron rays, ultraviolet rays, visible light rays, gamma rays, and the like, and ultraviolet rays are preferred from the viewpoint of production facilities. At this time, a specific example of the energy ray-curable bonding agent is an ultraviolet ray-curable resin. The energy ray-curable bonding agent may contain a photosensitizer, an antistatic agent, an infrared ray absorber, an ultraviolet ray absorber, an oxidation inhibitor, organic particles, inorganic oxide particles, metal powder, pigments, dyes, and the like according to necessity. For example, the bonding strength after curing can be improved by using a photosensitizer.

Examples of the energy ray-curable compound include photo radical polymerizable compounds and photo cationic polymerizable compounds.

Examples of the photo radical polymerizable compounds include hydroxy alkyl acrylate, hydroxy aryl acrylate, acrylic modified carbonate, polyethylene glycol diacrylate, polypropylene glycol diacrylate, multifunctional acrylates, epoxy acrylate, urethane acrylate, acrylate benzoate-mixed ester of neopentyl glycol, and other acrylates, or methacrylates thereof. Examples of the photo cationic polymerizable compound include bisphenol-type epoxy resins, novolac-type epoxy resins, alipathic epoxy resins, alicyclic epoxy resins, heterocyclic epoxy resins, multifunctional epoxy resins, biphenyl-type epoxy resin, glycidyl ether-type epoxy resins, glycidyl ester-type epoxy resins, glycidyl amine-type epoxy resins, alcohol-type epoxy resins, halogenated epoxy resins, rubber-modified epoxy resins, urethane-modified epoxy resins, epoxidized polybutadiene, epoxidized styrene-butadiene-styrene block copolymers, epoxy group-containing polyester resins, epoxy group-containing polyurethane resins, epoxy group-containing acryl resins, compounds containing oxetanyl groups, and the like.

The polymerization initiator includes acetophenone-based, benzophenone-based, thioxanthen-based, benzoin-based, benzoin alkyl ether-based, and other photo radical polymerization initiators, aromatic diazonium salts, aromatic sulfonium salts, aromatic iodonium salts, methatherone compounds, benzoin sulfonate ester, and other photo cationic polymerization initiators. The polymerization initiator is selected in accordance with the kind of an energy ray to be used, and can be used in combination of two or more kinds.

Examples of the thermosetting adhesive that can be used include acryl-based, epoxy-based, urethane-based, polyester-based and other adhesives.

Examples of pressure-sensitive bonding agent (adhesive) that can be used include synthetic rubber-based resins, such as natural rubber-based, butyl rubber, polyisoprene, polyisobutylene, polychloroprene, and styrene-butadiene copolymer resins, silicone-based resins, acryl-based resins, vinyl acetate-based resins, such as polyvinyl acetate, ethylene-vinyl acetate copolymers, urethane-based resins, rosin-based resins, such as rosin, rosin triglycerides, and hydrogenated rosin, and the like.

### (Pattern layer)

The pattern layer is formed, for example, between the first bonding layer 21 and the second bonding layer 22, and has the first region R1 and the second region R2. For example, the second bonding layer 22 is easily detached from the first region R1. At this time, the first region R1 has a function as a detaching pattern with respect to the second bonding layer 22.

The first region R1 can be formed by, for example, coating or printing a composition that supplies detaching properties in a pattern shape on the surface of the second bonding layer 22 formed by laminating on the separator 51. Examples of the composition that supplies detaching properties to the second bonding layer 22 include paints or silicone resins having the main component of a binder with added components of wax, fluorine, and the like. Organo polysiloxanes having siloxane bonds composed of Si and O as the basic skeleton and organ groups at the side chains can be used as the silicone resin.

The first region R1 and the second region R2 may be set to any pattern inside the surface. For example, the first region R1 and the second region R2 can be set to a dot shape, a stripe shape, a lattice shape, a symbol shape, a letter shape, and other pattern shapes. When the first region R1 and the second region R2 are set to a letter shape, it is preferable to provide a word, such as "VOID," so that the fact that the hologram laminate 1 has been detached from the adherend 99 can be easily determined.

### (Second bonding layer)

The second bonding layer 22 is a bonding layer (adhering layer) for joining the hologram laminate 1 and the adherend 99. For example, the pressure-sensitive bonding agent (adhesive) that is exemplified as a material that can be used for the first bonding layer 21 can be used as the second bonding layer 22. Alternately, thermoplastic elastomers, such as styrene-butadiene-styrene block copolymer, styrene-isoprene-styrene block copolymer, and styrene-ethylene-butylene-styrene block copolymer, reaction hot melt resins, and the like may be used as the adhesive.

Examples of the adhesive include heat sealing agents, such as ethylene-vinyl acetate copolymer resins, polyamide resins, polyester resins, polyethylene resins, ethylene-isobutyl acrylate copolymer resins, butyral resins, polyvinyl acetate and copolymer resins thereof, cellulose derivatives, polymethyl methacrylate resins, polyvinyl ether resins, polyurethane resins, polycarbonate resins, polypropylene resins, epoxy resins, and phenol resins.

The second bonding layer 22 may be transparent, but is preferably a colored bonding layer, and more preferably a black bonding layer. When the first bonding layer 21 is transparent, the second bonding layer 22 becomes the background for a hologram image. This is because when the second bonding layer 22 is black at this time, the contrast of the hologram image is increased so that the hologram becomes easily observable, and the visibility or readability of the recorded holograms is improved. Here, the black refers to the optical density (OD) being 1.0 or higher, the brightness in the L*a*b color system defined by JIS Z 8729 being 30 or less, or the average reflection rate at a wavelength in the visible light region of 400 nm to 750 nm being in a range of 20% or lower. When the OD, brightness, and average reflection rate are in the above ranges, it is easy to observe the hologram, which is preferable.

There are cases in which, for example, a black sheet is provided inside the hologram recording layer when the hologram is viewed by an observer in order to increase the contrast of the hologram; however, when the second bonding layer 22 is black, it is not necessary to provide the black sheet, and the thickness of the hologram laminate 1 can be reduced. In addition, when the hologram laminate 1 is detached from the adherend 99, the black second bonding layer 22 remains in the pattern shape of the first region R1 on the adherend 99, and therefore it becomes easy to determine detachment of the hologram laminate 1 from the adherend 99 clearly.

The second bonding layer 22 can be made into a colored bonding layer by including a pigment, a dye, or a mixture thereof in a material that composes the second bonding layer 22. Examples of black pigments include black pigments, such as carbon black, copper-iron-manganese, and aniline black. Examples of black pigments include black pigments, such as acid black, chrome black, Reatek black, and the like.

Meanwhile, a base material layer of a resin film and the like may be interposed between the first bonding layer 21 and the pattern layer 41 or between the pattern layer 41 and the second bonding layer 22.

### [Method of manufacturing the hologram laminate]

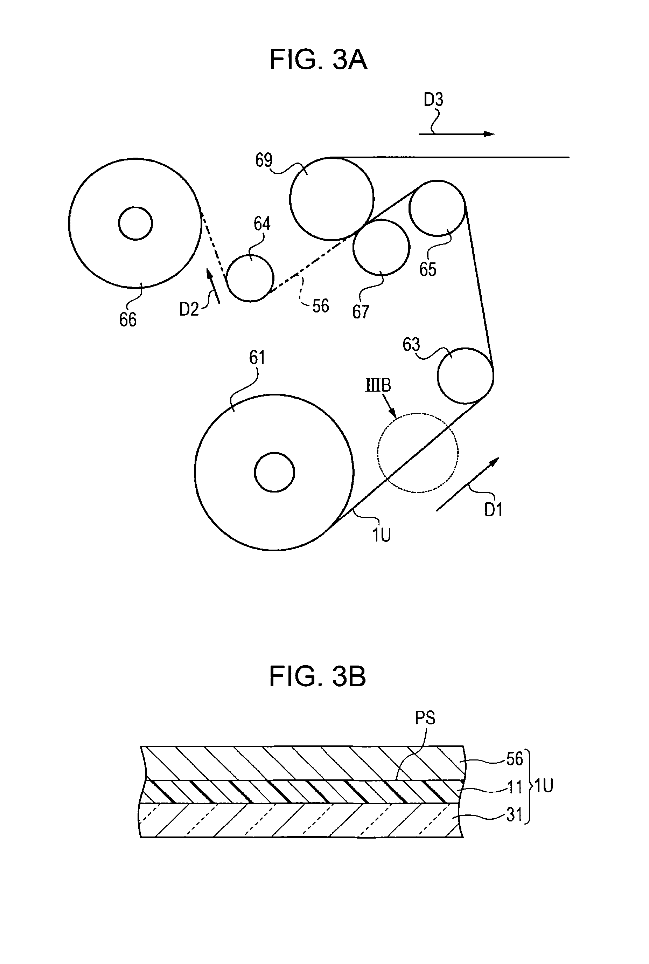

Hereinafter, each process in the method of manufacturing the hologram laminate according to the first embodiment will be described with reference to Figs. 3A to 6. Meanwhile, a series of the manufacturing process is divided and shown in Figs. 3A to 4D, and 6 due to the limitation on the size of the drawing, but a part or all of the process may be carried out in a roll-to-roll manner in consideration of productivity.

In the first embodiment, for example, a first laminate 1U provided with the hologram recording layer 11, the first bonding layer 21, the pattern layer 41 having the first region R1 and the second region R2, and the second laminate 1L provided with the second bonding layer 22 are joined via the first bonding layer 21.

According to at least one of the examples, since it is not necessary to handle a liquid-shaped bonding agent inside a manufacturing apparatus, the hologram laminate can be made to be thin without complicating the process. For example, there is demand for the hologram laminate to be as thin as possible with respect to a memory being inserted and used in a slot or a hologram laminate adhered to a battery and the like that is combined in a device. Making the hologram laminate thin removes the necessity for providing deep recess portions on the surface of an adherend, removes the necessity for making a chip thinner than necessity when the hologram laminate is a memory, and reduces the defect percentage caused by cracking or voids in a chip occurring in the manufacturing process. When the hologram laminate is a battery, the loss of volume energy density is suppressed.

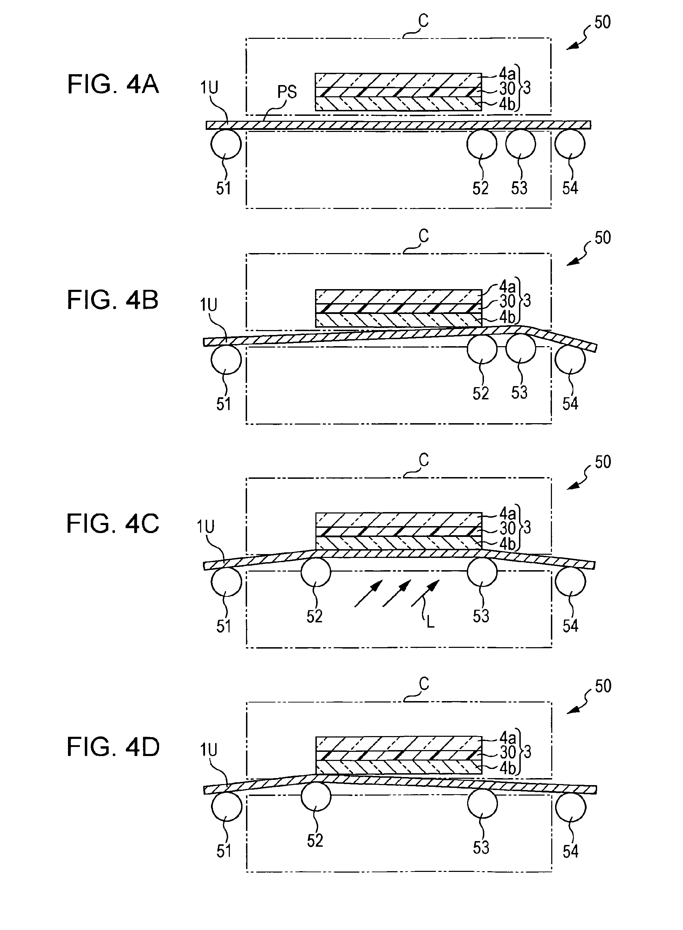

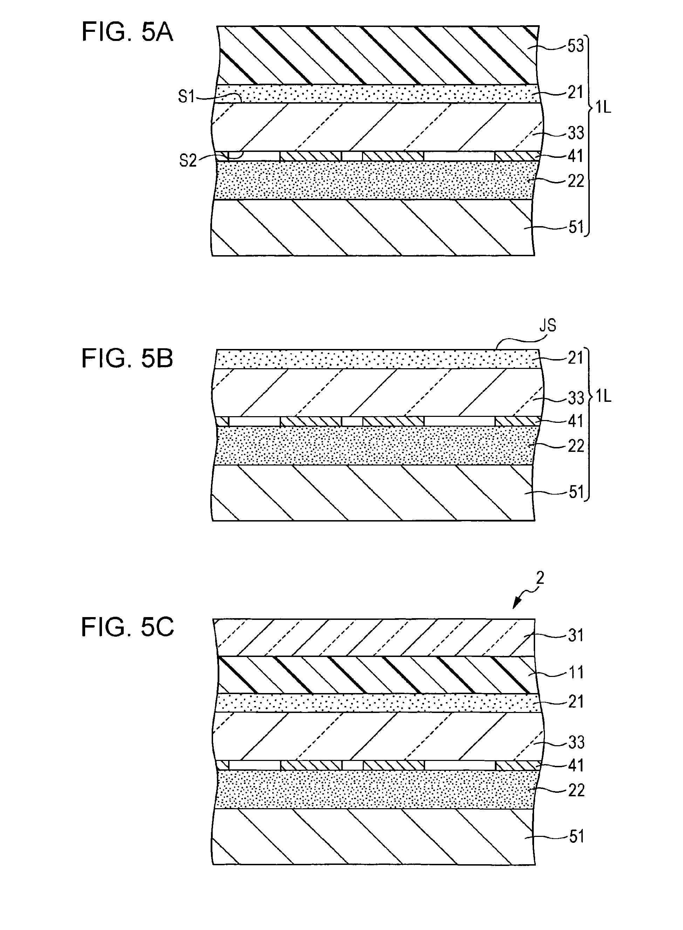

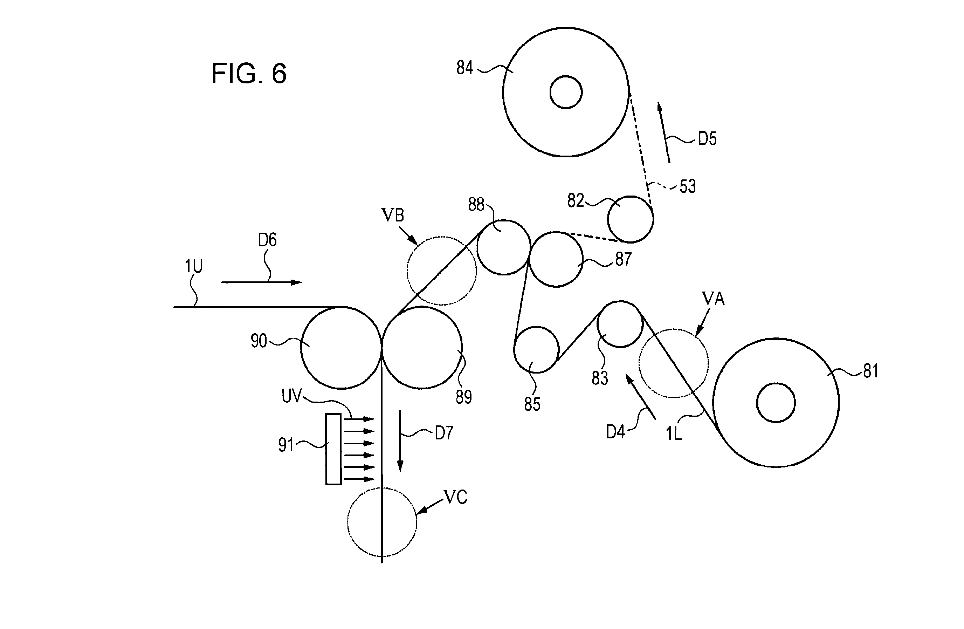

Figs. 3A and 3B are simplified line drawings used for explaining the first laminate of the hologram laminate according to the first embodiment. Figs. 4A to 4D are simplified line drawings used for explaining the hologram recording process. Figs. 5A to 5C are schematic cross-sectional views showing a laminate structure in each of the processes. Fig. 6 is a simplified line drawing used for explaining the joining process in which the first laminate and the second laminate are joined.

### (First laminate)

Firstly, as shown in Fig. 3A, for example, a laminate in which the cover film 31, the hologram recording layer 11, and the separator 56 are laminated in advance is reeled out in the D1 arrow direction from a supply reel 61. Here, for example, the sheet-shaped cover film 31 composed of polyethylene terephthalate functions as a supporter of the hologram recording layer 11. Fig. 3A shows an example in which a laminate in which the cover film 31, the hologram recording layer 11, and the separator 56 are laminated in advance is supplied in a state in which the laminate is wound in a roll shape, but may be supplied in a sheet state.

The cover film 31 is, for example, a sheet-shaped polyethylene terephthalate film. The hologram recording layer 11 is, for example, a layer in which a light-curable photopolymer is formed in an uncured or semi-cured state (hereinafter this state will be referred to appropriately as the wet state). Hereinafter, a laminate provided with the hologram recording layer 11 will be called the first laminate 1U. Fig. 3B shows a schematic cross-sectional view of the first laminate 1U in the IIIB portion shown by a broken line in Fig. 3A.

The first laminate 1U reeled out from the supply reel 61 runs on rollers 63 and 65 sequentially, and is introduced between a roller 67 and a roller 69. Meanwhile, the rollers 63 and 65 can supply a tensile force to the first laminate 1U using a torsion coil spring in order to prevent the first laminate 1U from being loosened.

Here, the separator 56 is separated from the first laminate 1U. The separated separator 56 passes through the roller 64, runs in the D2 arrow direction, and is wound on a winding reel 66. Meanwhile, the laminate supplied from the supply reel 61 may not include the separator 56. At this time, the roller 64 and the winding reel 66 may not be provided.

On the other hand, the first laminate 1U from which the separator 56 is separated is wound on the circumferential surface of the roller 69, and runs in the D3 arrow direction. The first laminate 1U falls in a state in which the surface of the hologram recording layer 11 is exposed. Hereinafter, the exposed surface of the hologram recording layer 11 will be called the exposed surface PS of the hologram recording layer 11.

### (Recording of holograms)

Next, the first laminate 1U is introduced to a reproducing apparatus 50 for recording the hologram. In the reproducing apparatus 50, the hologram recording layer 11 and a hologram original edition 3 come into close contact with each other in a state in which the first laminate 1U is stopped, and recording laser light L is irradiated with respect to the hologram recording layer 11 and the hologram original edition 3. The hologram original edition 3 is, for example, a recording-completed hologram layer 30 interposed between glass sheets 4a and 4b. The interruption patterns between diffraction light from the hologram original edition 3 and the laser light L are recorded in the hologram recording layer 11 as the variation of the refractive index. The hologram of the hologram original edition 3 is reproduced in the hologram recording layer 11 as a hologram in the above manner.

As shown in Figs. 4A to 4D, the reproducing apparatus 50 is provided with a chamber C (indicated by two-dot chain line) that seals a reproducing area including the hologram original edition 3 and rollers 51, 52, 53, and 54 having a width of the circumferential surface which is larger than the width of the hologram original edition 3. According to necessity, an exhausting apparatus that forms a vacuum environment in the entire chamber C may be provided. The hologram original edition 3 is disposed so as to face the exposed surface PS of the hologram recording layer 11 of the first laminate 1U. The rollers 51 to 54 are disposed in the cover film 31 side of the first laminate 1U. Among the rollers 51 to 54, the rollers 51 and 54 are disposed on the entrance side and the exit side of the reproducing apparatus 50, respectively. The installing locations of the rollers 51 and 54 are fixed. Among the rollers 51 to 54, the rollers 52 and 53 are disposed close to the exit side of the first laminate 1U in the reproducing apparatus 50, and the roller 52 is disposed below the edge of the hologram original edition 3. The rollers 52 and 53 can slide along the vertical direction and the transportation direction of the first laminate 1U.

As shown in Fig. 4A, when the first laminate 1U is introduced to the reproducing apparatus 50, the first laminate 1U is transported until the reproducing area of the first laminate 1U is located below the hologram original edition 3, and then the transportation of the first laminate 1U is stopped. That is, the transportation of the first laminate 1U to the reproducing apparatus 50 is an intermittent feed. Once the transportation of the first laminate 1U is stopped, the inside of the chamber C is made to be a vacuum according to necessity. The reason why the inside of the chamber C is made to be a vacuum is to prevent air from flowing into between the hologram original edition 3 and the hologram recording layer 11 of the first laminate 1U.

Next, as shown in Fig. 4B, the rollers 52 and 53 are raised, and the first laminate 1U is carried up. The rollers 52 and 53 are raised slightly above the location where the first laminate 1U comes into contact with the edge of the hologram original edition 3. Therefore, the hologram recording layer 11 of the first laminate 1U is pushed on the edge of the hologram original edition 3.

Next, as shown in Fig. 4C, the rollers 52 and 53 slide in a substantially horizontal direction toward the entrance side of the reproducing apparatus 50. The roller 53 pushes the first laminate 1U to the edge of the hologram original edition 3 on the exit side. In addition, the roller 52 slides to the edge of the hologram original edition 3 on the entrance side so that the hologram recording layer 11 of the first laminate 1U is pressed on the hologram original edition 3. Since a light-curable photopolymer that composes the hologram recording layer 11 is in the wet state, it is possible to suppress air from flowing into between the hologram original edition 3 and the hologram recording layer 11, and to stabilize the reproduction of the hologram. In addition, since a close-contact fluid is not separately used, it is possible to remove a process in which an optical close-contact fluid is coated on the interface so that the hologram original edition 3 and the hologram recording layer 11 come into close contact with each other, and air is removed from between the hologram original edition 3 and the hologram recording layer 11.

Next, the laser light L is irradiated from below in a state in which the hologram original edition 3 and the hologram recording layer 11 are in close contact, and the hologram of the hologram original edition 3 is reproduced in the hologram recording layer 11. The wavelength of the laser light L is the same as when the hologram of the hologram original edition 3 is recorded.

Next, as shown in Fig. 4D, the roller 53 is lowered, and the first laminate 1U is detached from the hologram original edition 3 at the edge of the reproducing apparatus 50 on the exit side. Meanwhile, when the inside of the chamber C is in a vacuum state, air is introduced before the roller 53 is lowered. When the first laminate 1U is detached from the hologram original edition 3, the rollers 52 and 53 return to the original location shown in Fig. 4A. In addition, the first laminate 1U is transported until the next recording area is located below the bottom surface of the hologram original edition 3, and the same reproducing process as above is carried out.

Next, when it is necessary to carry out a post treatment, such as ultraviolet ray irradiation or heating, for the light-curable photopolymer to settle the recording image, the post treatment is carried out subsequent to the recording of the hologram. For example, ultraviolet rays are irradiated by an ultraviolet lamp with respect to the first laminate 1U, and the polymerization of monomers M is completed. In addition, for example, the first laminate 1U is heated by a heating roller, and the recording image is settled. The above post treatment increases the degree of the refractive index modulation of the light-curable photopolymer, and settles the recording image in the hologram recording layer 11.

### (Second laminate)

Next, the first laminate 1U provided with the hologram recording layer 11 and the second laminate 1L are joined. Here, the second laminate 1L will be described.

The second laminate 1L is provided with the first bonding layer 21, the pattern layer 41, and the second bonding layer 22. Fig. 5A shows a schematic cross-sectional view regarding a configuration example of the second laminate 1L. As shown in Fig. 5A, in the second laminate 1L, for example, the separator 51, the second bonding layer 22, the pattern layer 41, the base material layer 33, the first bonding layer 21, and a separator 53 are laminated in this order.

Here, the base material layer 33 is provided as a supporter of the first bonding layer 21, the pattern layer 41, and the second bonding layer 22 according to necessity. When the base material layer 33 is provided, for example, a roll coater, a knife coater, a gravure coater, a die coater, a reverse coater, or the like is used, and the first bonding layer 21 can be formed on the surface S1 of the base material layer 33 by coating a material that composes the first bonding layer 21 in an appropriate thickness.

In addition, the pattern layer 41 can be formed on the surface S2 in the opposite side of the surface S1 of the base material layer 33 by, for example, carrying out coating or printing. Alternately, the second region R2 may be formed by coating or printing a paint containing a substance that plays a role of a primer increasing the bonding strength between the base material layer 33 and the second bonding layer 22 in a pattern shape. A fine recess and protrusion shape may be formed only in the portion corresponding to the second region R2 on the surface S2 of the base material layer 33 so that the portion corresponding to the second region R2 exhibits an anchor effect with respect to the second bonding layer 22.

The second bonding layer 22 can be formed by coating a material that composes the second bonding layer 22 in an appropriate thickness on the surface S2 of the base material layer 33 on which the pattern layer 41 has been formed similarly to the first bonding layer 21. After the second bonding layer 22 is formed on one main surface of the separator 51, the base material layer 33 on which the pattern layer 41 has been formed may be adhered.

Examples of the base material layer 33 that can be used include polymethyl methacrylate, polyester, polyimide, and the like as well as polyethylene terephthalate, carbonate. The base material layer 33 may be color-tinged, but preferably has light permeability. When the hologram laminate is detached from the adherend, since the second bonding layer 22 is fallen off from the hologram laminate in the pattern shape of the first region R1, it is possible to easily determine the detachment of the hologram laminate from the adherend with the detached hologram laminate.

The separator 53 is provided according to necessity. For example, a resin film obtained by carrying out a mold release treatment on a polyethylene terephthalate film or a polypropylene film using a fluorine-based mold release agent, a silicone-based mold release agent, or the like can be used as the separator 51 and the separator 53. Alternately, a release paper may be used.

Meanwhile, the base material layer 33 may be provided when the separator 51 or the separator 53 functions as a supporter of the first bonding layer 21, the pattern layer 41, and the second bonding layer 22.

### (Joining of the first laminate and the second laminate)

As shown in Fig. 6, the second laminate 1L is reeled out in the D4 arrow direction from the supply reel 81. The schematic cross-sectional view regarding a configuration example of the second laminate 1L shown in Fig. 5A is the layer configuration of the second laminate 1L in the B portion shown by the broken line in Fig. 6. Hereinafter, an example in which the base material layer 33 is provided in the second laminate 1L will be described.

The first bonding layer 21 is formed in a sheet shape in advance. Similarly to the first laminate 1U, the second laminate 1L is supplied in a state in which, for example, the second laminate is wound in a roll shape or in a sheet state in the supply reel 81. The first bonding layer 21 is in the wet state before the first laminate 1U and the second laminate 1L are joined. Hereinafter, an example in which an ultraviolet ray-curable adhesive is used as the first bonding layer 21 will be described.

The first bonding layer 21 is configured by, for example, forming an ultraviolet ray-curable resin in the wet state in a sheet shape in advance. Therefore, the above layer configuration of the hologram laminate can be realized only by curing the first bonding layer 21 in a state in which the first laminate 1U and the second laminate 1L are in close contact. Meanwhile, the defect percentage caused by the degradation of a photosensitive material, the attachment of a foreign substance, and the like can be reduced by carrying out a series of manufacturing processes inline.

The second laminate 1L reeled out from the supply reel 81 runs the rollers 83 and 85 sequentially, and is introduced between the roller 87 and the roller 88. Meanwhile, the rollers 83 and 85 can supply a tensile force to the second laminate 1L using a torsion coil spring in order to prevent the second laminate 1L from being loosened.

The roller 87 is provided in order to separate the separator 53 from the second laminate 1L, and the separator 53 separated from the second laminate 1L passes through the roller 82, runs in the D5 arrow direction, and is wound on a winding reel 84. When the separator 53 is not provided in the second laminate 1L, the rollers 87 and 82 and the winding reel 84 may not be provided.

Next, the running direction of the second laminate 1L which has been separated from the separator 53 by the roller 87 is changed by the roller 88, and the second laminate 1L is introduced between the roller 89 and 90. At this time, the separator 51 is located on the side where the separator comes in contact with the roller 89. Fig. 5B shows a schematic cross-sectional view of the laminate of the second laminate 1L in the C portion shown by the broken line in Fig. 6. As shown in Fig. 5B, the second laminate 1L from which the separator 53 has been separated is in a state in which one main surface JS of the first bonding layer 21 in the wet state is exposed.

The first laminate 1U for which the recording of the hologram and the post treatment have been carried out and which runs in the D6 arrow direction is introduced between the rollers 89 and 90 together with the second laminate 1L as shown in Fig. 6. At this time, the cover film 31 is located on the side where the cover film is in contact with the roller 90. Therefore, the surface PS of the first laminate 1U and the surface JS of the second laminate 1L face each other between the rollers 89 and 90.

Next, the first laminate 1U introduced between the rollers 89 and 90 and the second laminate 1L is pressed and adhered by the rollers 89 and 90. That is, the cover film 31, the laminate of the hologram recording layer 11, the base material layer 33, the pattern layer 41, the second bonding layer 22, and the laminate of the separator 51 are joined via the first bonding layer 21 so as to be integrated.

Next, while the laminates of the first laminate 1U and the second laminate 1L run in the D7 arrow direction, ultraviolet rays UV are irradiated from an ultraviolet ray lamp 91, and an ultraviolet ray-curable adhesive that composes the first bonding layer 21 is cured. Fig. 5C shows a schematic cross-sectional view of a laminate obtained by adhering the first laminate 1U and the second laminate 1L in the D portion shown by the broken line in Fig. 6.

The hologram laminate 2 according to the first embodiment is obtained through the above process. According to necessity, stripping or cutting is carried out with respect to the hologram laminate 2, and the hologram laminate 2 is subjected to a post process, such as an inspection process or an integration process. Hereinafter, an example of the thickness of each of the layers in the hologram laminate 2 obtained by the above process will be shown. Meanwhile, the numeric values shown below are just examples. The thickness of each layer of the hologram laminate is not limited to these numeric values.
Cover film: 36 µm
Hologram recording layer: 14 µm
First bonding layer: 9 µm
Base material layer: 25 µm
Pattern layer: 1 µm
Second bonding layer: 15 µm
(Separator): (38 µm)

### [Modified example of the first embodiment]

In the above manufacturing method, the first laminate 1U in which the cover film 31, the hologram recording layer 11, and the separator 56 are laminated in advance is supplied from the supply reel. In the modified example of the first embodiment, firstly, the cover film is supplied, and a light-curable photopolymer is coated on the cover film so as to form a hologram recording layer, thereby composing the first laminate 1U.

### (Formation of the hologram recording layer)

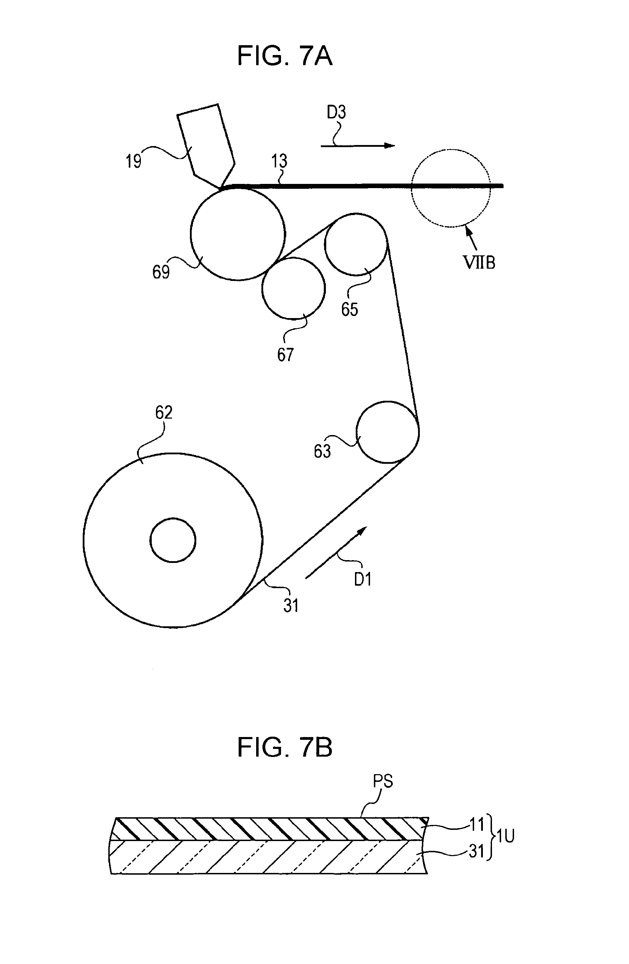

Figs. 7A and 7B are simplified line drawings used for explaining the process of forming the hologram recording layer. As shown in Fig. 7A, the sheet-shaped cover film 31 composed of, for example, polyethylene terephthalate is reeled out in the D1 arrow direction from the supply reel 62. The cover film 31 is supplied in a state in which, for example, the cover film is wound in a roll shape or in a sheet shape in the supply reel 62.

The cover film 31 reeled out from the supply reel 62 runs sequentially on the rollers 63 and 65, passes between the roller 67 and the roller 69, and is wound on the circumferential surface of the roller 69. Meanwhile, the rollers 63 and 65 can supply a tensile force to the cover film 31 using a torsion coil spring in order to prevent the cover film 31 from being loosened.

Next, a photosensitive material, for example, the light-curable photopolymer 13 is coated in a certain film thickness by a slit die head 19 on the cover film 31 wound on the main surface of the roller 69. Therefore, the cover film 31 has a function of the supporter of the light-curable photopolymer 13 until the first laminate 1U and the second laminate 1L are joined.

The cover film 31 having the light-curable photopolymer 13 coated on one main surface runs in the D3 arrow direction. According to necessity, the coated light-curable photopolymer 13 is dried by far infrared rays, hot air, or the like. The drying is carried out in order to prevent the coated light-curable photopolymer 13 from being hung out. After the drying, the light-curable photopolymer 13 that composes the hologram recording layer 11 is in the wet state. After the drying, the thickness of the hologram recording layer 11 (the coated light-curable photopolymer 13) is measured using a film thickness measuring apparatus, and the opening and closing of the slit in the slit die head 19 and the width of the opening may be controlled so that the thickness of the coated light-curable photopolymer 13 becomes constant.

Fig. 7B is a schematic cross-sectional view of the first laminate 1U in the E portion shown by the broken line in Fig. 7A. According to necessity, the dried first laminate 1U is introduced to the reproducing apparatus 50 for recording the hologram.

### <2. Second embodiment>

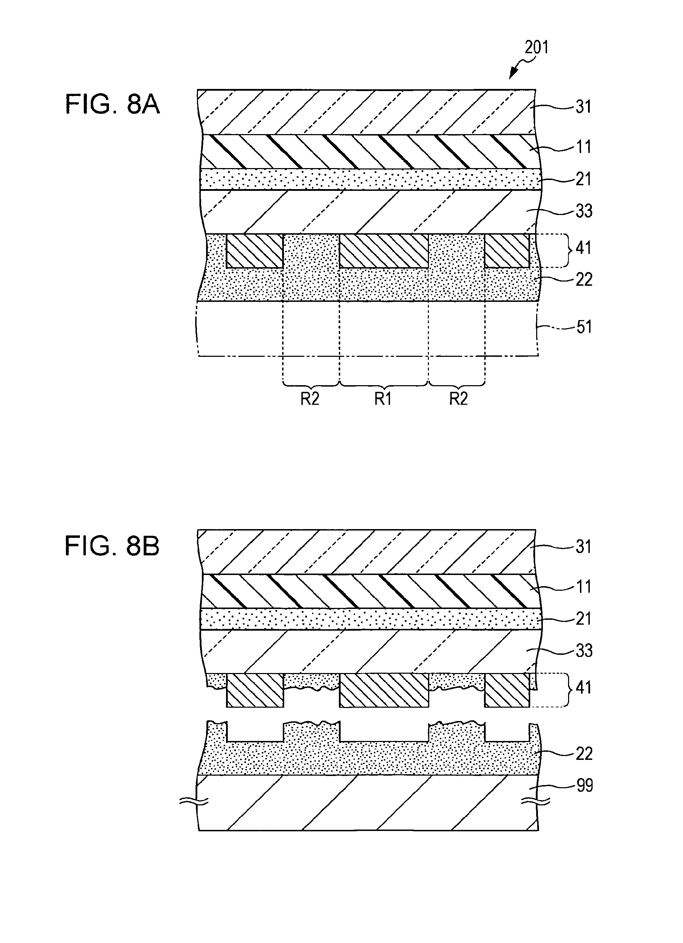

Fig. 8A is a schematic cross-sectional view showing a configuration example of the hologram laminate according to the second embodiment. Fig. 8B is a schematic cross-sectional view for explaining a state in which the hologram laminate according to the second embodiment is detached from an adherend. In Figs. 8A and 8B, the pattern layer is drawn to be thick for convenience of explanation.

As shown in Fig. 8A, the hologram laminate 201 according to the second embodiment is provided with the hologram recording layer 11, the first bonding layer 21, the base material layer 33, the pattern layer 41, and the second bonding layer 22. In the configuration example shown in Fig. 8A, similarly to the first embodiment, for example, the first region R1 of the pattern layer 41 is formed by coating or printing a composition that supplies detaching properties in a pattern shape on one main surface of the base material layer 33. A material that composes the second bonding layer 22 is contained in the second region R2.

In the second embodiment, the detaching strength of the second bonding layer 22 with respect to the base material layer 33 is large in comparison to the self-gathering force or rupture strength of the second bonding layer 22. The detaching strength of the second bonding layer 22 with respect to the adherend 99 is large in comparison to the detaching strength of the second bonding layer 22 with respect to the base material layer 33. Furthermore, the self-gathering force or rupture strength of the first bonding layer 21, the detaching strength of the first bonding layer 21 with respect to the hologram recording layer 11, and the detaching strength of the first bonding layer 21 with respect to the base material layer 33 are large in comparison to the detaching strength of the second bonding layer 22 with respect to the adherend 99.

As shown in Fig. 8B, when the hologram laminate 201 is detached from the adherend 99 with an effort to prevent the cohesion failure of the hologram recording layer 11 from occurring, the second bonding layer 22 is ruptured in the second region R2. That is, a part of the second bonding layer 22 remains attached to the hologram recording layer 11.

According to the second embodiment, since a part of the second bonding layer 22 remains attached to the hologram recording layer 11, it is possible to clearly determine the detachment of the hologram laminate 201 from the adherend 99.

### <3. Third embodiment>

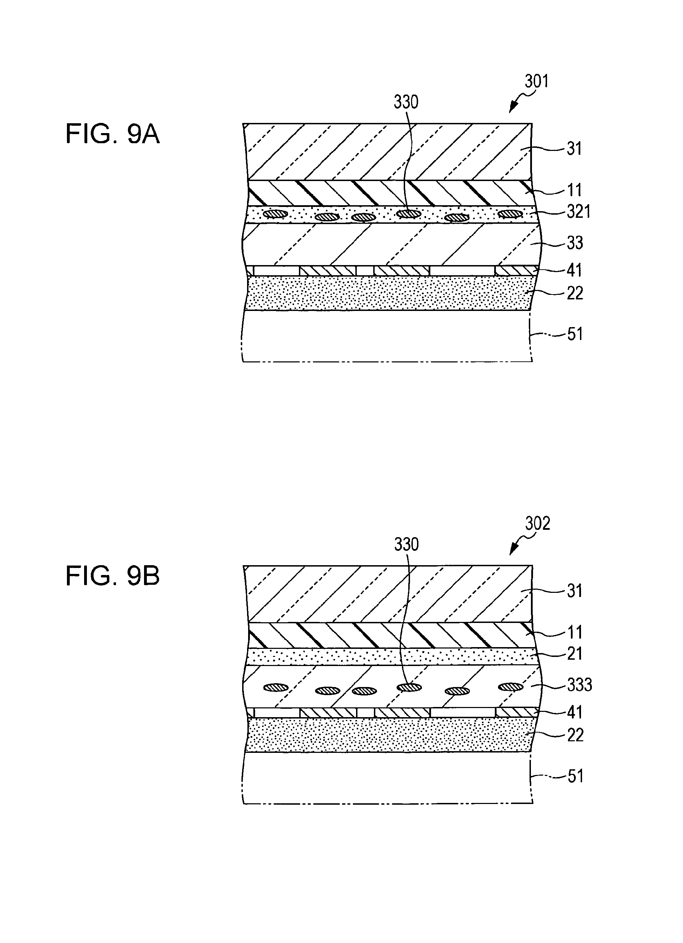

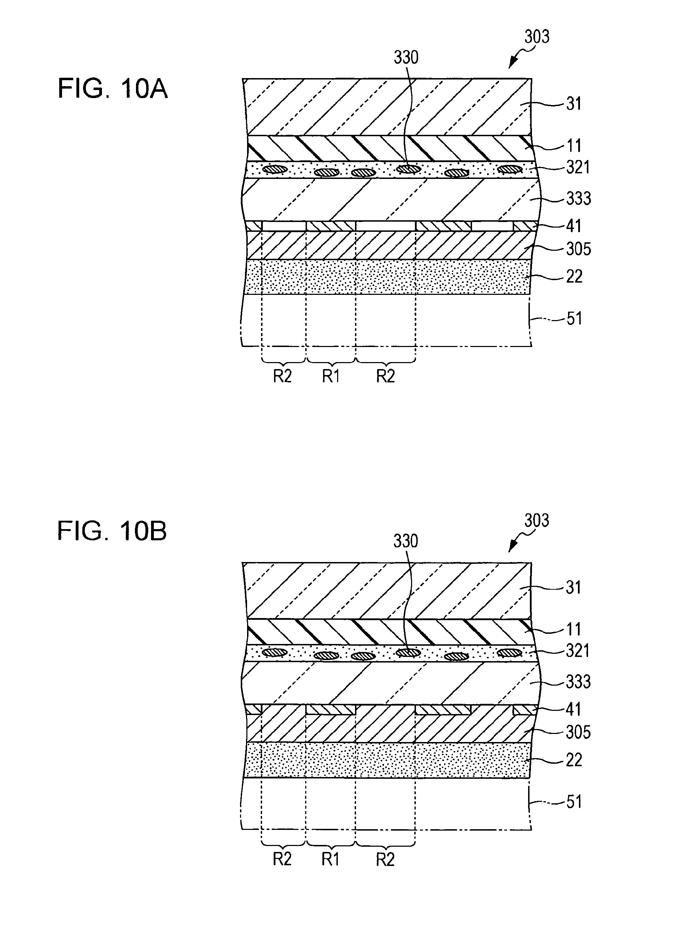

Fig. 9A is a schematic cross-sectional view showing a configuration example of the hologram laminate according to the third embodiment. Fig. 9B is a schematic cross-sectional view showing a first modified example of the hologram laminate according to the third embodiment. Figs. 10A and 10B are schematic cross-sectional views showing a second modified example of the hologram laminate according to the third embodiment.

As shown in Fig. 9A, the hologram laminate 301 according to the third embodiment is provided with the hologram recording layer 11, the first bonding layer 321, the pattern layer 41, and the second bonding layer 22. The hologram laminate 301 according to the third embodiment is provided with a diffusion and reflection member 330 having reflection characteristics that are different from those of the main material that composes the first bonding layer 321 in the first bonding layer 321.

The diffusion and reflection member 330 is a member disposed in order to diffuse and reflect light incident to the hologram laminate 301 when the hologram laminate 301 according to the third embodiment is observed. The diffusion and reflection mentioned in the present specification refers to the reflection of diffusive light excluding mirror reflection which is defined in JIS Z 8741. The mirror reflection refers to the reflection of light that follows the law of reflection, such as the reflection on the surface of a mirror, which is defined in JIS Z 8741. In addition, the mirror reflection direction refers to the travelling direction of the reflected light having a reflection angle that is the same as the incident angle of the incident light.

Here, it is still possible to reproduce a volume hologram by the method called contact copy in which an unexposed hologram recording material is closely brought, and a laser having a wavelength close to the recording wavelength is irradiated. Therefore, illegal copying of holograms using the hologram laminate detached from the adherend as the original edition can be considered.

In the third embodiment, the first bonding layer 321 is provided with the diffusion and reflection member 330 having reflection characteristics that are different from those of the main material that composes the first bonding layer 321. Therefore, the diffusion and reflection light from the diffusion and reflection member 330 is recorded in the copied holograms even when illegal copying is carried out using the hologram laminate 301 detached from the adherend as the original edition. Therefore, the authenticity of the hologram laminate 301 can be easily determined.

A member that diffuses and reflects so that the presence of the diffusion and reflection member 330 can be confirmed when the hologram laminate 301 is observed from the front surface is selected as the diffusion and reflection member 330. For example, metal powder or a metal specimen having recesses and protrusions on the surface can be used as the diffusion and reflection member 330. In addition, for example, the following can be used, and a multilayer structure in which some of the following are laminated or mixed may be used.
A. Metal color evaporation powder (metallic flake, example: "LG," manufactured by Daiya Industry)
B. Pearl pigment (pearlescent pigment, example: "ULTIMICA (registered trademark)," manufactured by Nihon Koken Co., Ltd.)
C. A silver-plated glass flake pigment, an aluminum flake pigment, a titanium dioxide pigment, or mixture thereof
D. ChromaFlair pigment (a material whose color is shifted according to the viewing angle, example: "MAZIORA (registered trademark)," manufactured by Nippon Paint Co., Ltd.)
E. Hologram specimen (example: DAIYA HOLOGRAM AL TYPE, HG-S20AL (0.2 mm specimen, thickness of 0.012 mm), manufactured by Daiya Industry)
F. Glitter (a pigment having a lame feeling, example: manufactured by Nihon Koken Co., Ltd.)
G. Fluorescent pigment (example: "SINLOIHI COLOR (registered trademark)," manufactured by Sinloihi Co., Ltd.)
H. Photoluminescent pigment
I. Metal powder or metal foils of metal powder, copper powder, zinc powder, gold foils, silver foils, zinc foils, and the like
J. Foreign film laminate of polyethylene terephthalate, polymethyl methacrylate, and the like (example: "RAINBOW FLAKE," manufactured by Daiya Industry)

Meanwhile, the color sensed from the diffusion and reflection member 330 when the hologram laminate 301 is observed from the front surface is preferably different from the color sensed when the hologram recorded in the hologram recording layer 11 is observed. For example, when a hologram is recorded using laser light that has a wavelength corresponding to green, the color sensed from the diffusion and reflection member 330 is preferably, for example, a color close to red. When the authentic hologram laminate 301 is observed, red is felt from the reflected light from the diffusion and reflection member 330, but the color when the image of the diffusion and reflection member 330 which is recorded in an illegally copied hologram becomes green close to the recording wavelength of the hologram. That is, it is possible to facilitate the authenticity determination of the hologram laminate 301.

For example, about 1500 particles of metal powder per 1 cm³ are interfused in the first bonding layer 321 as the diffusion and reflection member 330. At this time, when the hologram laminate 301 is observed, the interfused metal specimen comes to appear at a random location. The content of the diffusion and reflection member 330 is preferably set to 0.01% to 30%, and more preferably 0.1% to 5% by the volume fraction. When the volume fraction is the interfusion in the above range, there is no case in which the appearance of the overall hologram is deteriorated. In addition, the observer of the hologram laminate 301 can recognize the presence of the diffusion and reflection member 330 in the hologram laminate 301 by visual observation or observation using a microscope or a magnifying glass.

Meanwhile, a mirror reflection member may be used instead of the diffusion and reflection member 330. For example, it is also possible to use a spherical reflection member.

### [First modified example of the third embodiment]

As shown in Fig. 9B, the hologram laminate 302 may be configured by dispersing the diffusion and reflection member 330 having reflection characteristics that are different from the main material composing the base material layer 333 in the base material layer 333 instead of the first bonding layer 321.

The base material layer 333 in which the diffusion and reflection member 330 is dispersed can be formed by, for example, melting a raw material chip composed of polyethylene terephthalate and the like so as to disperse the diffusion and reflection member 330 and then molding the chip into a sheet shape. Examples of the molding method include extrusion molding, draw molding, cast molding in which the chip is diluted in a solvent, and a film-shaped film is formed and dried, and the like.

### [Second modified example of the third embodiment]

As shown in Fig. 10A, a colored layer 305 may be provided between the pattern layer 41 and the second bonding layer 22. In the second modified example of the third embodiment, the diffusion and reflection member 330 is dispersed in at least one of the first bonding layer 321, the base material layer 333, and the colored layer 305.

The colored layer 305 may have the same color throughout the entire surface, or may have different colors, for example, in a letter shape, a symbol shape, a pattern shape, or the like. As shown in Fig. 10B, the colored layer 305 may be formed so that the material composing the colored layer 305 buries the second region R2 of the pattern layer 41. Meanwhile, the thickness of the pattern layer 41 is set to be thin in comparison to other layers composing the hologram laminate 303, for example, about 1 µm.

Since the colored layer 305 is provided on the side close to the observer of the hologram laminate 303 with respect to the second bonding layer 22, the second bonding layer 22 may not be a colored bonding layer.

### <4. Fourth embodiment>

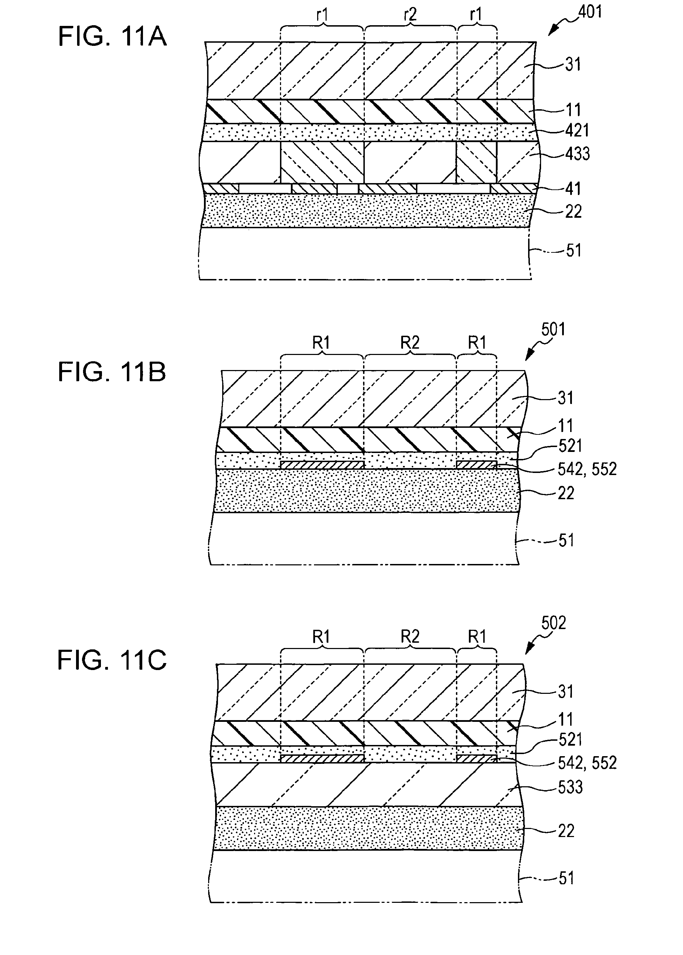

Fig. 11A is a schematic cross-sectional view showing a configuration example of the hologram laminate according to the fourth embodiment. As shown in Fig. 11A, the hologram laminate 401 according to the fourth embodiment is provided with the hologram recording layer 11, the first bonding layer 421, the base material layer 433, the pattern layer 41, and the second bonding layer 22.

In the fourth embodiment, the base material layer 433 has patterned optical anisotropy. Here, the 'having patterned optical anisotropy' refers to the fact that the polarization state of light reflected from at least a part of the region of the base material layer is different from the polarization state of light reflected from other regions. Specifically, for example, the base material layer 433 has the first region r1 and the second region r2, and either of the first region r1 or the second region r2 is set to show birefringence. In addition, for example, a recess and protrusion shape composed of an array of several tens of nm to several hundreds of nm is formed in the first region r1 and the second region r2 on the main surface on the side where the recess and protrusion shape is in contact with the first bonding layer 421. The presence or absence of optical anisotropy can be obtained by, for example, computation from the thickness of the specimen and the phase difference of permeated light when a single wavelength light flux is incident to the specimen. In addition, for example, measurement is possible by reflection measurement and permeation measurement using an ellipsometer.

In the fourth embodiment, for example, the polarization state of light reflected from the first region r1 is set to be different from the polarization state of light reflected from the second region r2. When an attempt is made to carry out illegal copying of the hologram laminate 401 detached from the adherend so as to make laser light incident, interruption with the light reflected from one of the first region r1 and the second region r2 is made to be large so that the interruption between the light reflected from the other and the laser light can be made to be small. That is, the patterning shape of the first region r1 or the second region r2 can be recorded as holographic with respect to an illegally copied hologram.

For example, if the first region r1 or the second region r2 is patterned in a hidden letter or pattern shape, the hidden letter or pattern recorded in the holographic is observed when an illegally copied hologram is observed. Therefore, the authenticity of the hologram laminate 401 can be determined by determining whether or not the hidden letter or pattern that is not present in the authentic hologram laminate is observed.

The recess and protrusion shape composed of an array having several tens of nm to several hundreds of nm structure formed on the first region r1 or the second region r2 can be formed by a so-called nanoimprint that forms a fine structure with a high aspect.

Other than the fact that the polarization state of the light reflected at least at a part of region of the base material layer is set to be different from the polarization state of the light reflected at other regions, the absolute refractive index in the first region r1 may be set to be different from the absolute refractive index in the second region r2.

Specifically, for example, at the same wavelength as when a hologram is recorded in the hologram recording layer 11, the absolute refractive index of the first bonding layer 421 is set to be larger by 0.05 or more than the absolute refractive index at one of the first region r1 and the second region r2. Here, the description will be made with the absolute refractive index of the first bonding layer 421 larger by 0.05 or more than the absolute refractive index at the first region r1. Hereinafter, a measurement apparatus of the refractive index will be shown.

Measurement apparatus: Abbe's refractometer (DR-A1, manufactured by Atago Co., Ltd.) or precision refractometer

### (KPR-2000, manufactured by Shimadzu Corporation)

Meanwhile, the refractive index may be obtained by making linear polarized light incident to the specimen using an ellipsometer, measuring the ellipticity ψ of the light reflected as elliptical polarized light and the rotation angle Δ of an ellipse, and fitting the optical constant from the ψ and the Δ. At this time, the thickness of the specimen may be obtained in advance by reflection rate spectroscopy.

For example, the absolute refractive index of the first bonding layer 421 is set to be larger by 0.05 or more than the absolute refractive index at the first region r1. When an attempt is made to carry out illegal copying of the hologram laminate 401 detached from the adherend so as to make laser light incident, mirror reflection occurs at the interface between the first bonding layer 421 and the first region r1, and the interruption pattern of the incident laser light (mirror reflected image) is recorded as a hologram. The interruption pattern is recorded in a hologram formed at certain intervals in parallel to the recording surface of the hologram recording layer 11 and is illegally copied. Such an interruption pattern is called a hologram mirror, and is formed along the region where the laser light is mirror-reflected, that is, the pattern of the first region r1. Therefore, when white illuminating light is irradiated from the vertical top with respect to the illegally copied hologram, light having a wavelength corresponding to the interruption pattern of the hologram mirror is diffracted vertically upward from the region having the same shape as that of the first region r1. Therefore, the authenticity of the hologram laminate 401 can be determined by determining whether or not the mirror-reflected image is observed.

In order to make the absolute refractive index at the first region r1 different from the absolute refractive index at the second region r2, for example, a film or the like which is partially cut off or partially changed in the thickness so as to form an air layer or the like may be used. In addition, for example, a recess and protrusion shape composed of a collection of fine structures may be formed at either or both of the first region r1 and the region r2 on the main surface of the base material layer 433 on the side where the recess and protrusion shape comes into contact with the first bonding layer 421.

Examples of the structures formed on the main surface of the base material layer 433 include a dot structure, a column structure formed inside, a ring structure, a bell-shaped structure, a lens-shaped structure, a column structure perpendicular to the main surface, a chiral structure, and the like. The fine structure is set to be, for example, several tens to several hundreds of nanometers in size, and, specifically, is formed by disposition pitches that are sufficiently smaller than the visible light range. Here, the visible light region refers to a wavelength region of 400 nm to 750 nm.

The collection of the fine structures can be formed using, for example, photolithography, electron beam lithography, nanoimprint, or the like, and may also be formed by disposing fine metal structures periodically.

### <5. Fifth embodiment>

Fig. 11B is a schematic cross-sectional view showing a configuration example of the hologram laminate according to the fifth embodiment. As shown in Fig. 11B, the hologram laminate 501 according to the fifth embodiment is provided with the hologram recording layer 11, the first bonding layer 521, the pattern layer 542, and the second bonding layer 22. In the fifth embodiment, the pattern layer 542 is formed on the main surface of the second layer 22 on the side where the first bonding layer 521 is formed.

In the fifth embodiment, the detaching strength of the first bonding layer 521 with respect to the first region R1 of the pattern layer 542 is set to be large in comparison to the self-gathering force or rupture strength of the pattern layer 542. Furthermore, the detaching strength of the first bonding layer 521 with respect to the hologram recording layer 11 is set to be large in comparison to the detaching strength of the first bonding layer 521 with respect to the first region R1 of the pattern layer 542.

In the configuration example in Fig. 11B, for example, the first region R1 of the pattern layer 542 is formed by printing an ink composition 552 in a pattern shape on the main surface of the second bonding layer 22 on the side where the first bonding layer 521 is formed. The second region R2 is, for example, a region where the ink composition 552 is not printed, and, at this time, the first region R1 of the pattern layer 542 is in a state of being buried in the first bonding layer 521.

When an attempt is made to detach the hologram laminate 501 from the adherend while attempting to prevent the cohesion failure of the hologram recording layer 11 from occurring, the pattern layer 542 is ruptured in the first region R1. That is, since a part of the ink composition composing the first region R1 is attached to the hologram recording layer 11 side, it is possible to clearly determine whether or not the hologram laminate 501 has been detached from the adherend.

The pattern layer 542 can be formed by printing the ink composition 552 in the first region R1 or the second region R2. Examples of the printing types that can be applied include gravure printing, screen printing, offset printing, ink jet printing, and the like. At this time, the design properties of the hologram laminate 501 can be improved by carrying out the patterning printing of a trademark, a logo, and the like.

The composition of the ink composition 552 is not particularly limited as long as the wetting properties or the fixing properties are favorable. The ink composition 552 contains, for example, a pigment, and contains a binder, a solvent, and the like according to necessity. Meanwhile, the ink composition 552 may include a transparent composition including no coloring agent, such as a pigment and a dye.

Particles reflecting light, for example, the above diffusion and reflection member, particles having gloss on the surface, fluorescent particles, or the like may be dispersed in the ink composition 552. At this time, the ink composition 552 may be transparent.

A so-called fluorescent ink containing a fluorescent substance may be used as the ink composition 552. Inorganic fluorescent substances or organic fluorescent substances can be used as the fluorescent substance. Examples of the inorganic fluorescent substances include calcium tungstate, magnesium tungstate, calcium sulfide-bismuth, zinc sulfide-silver, zinc sulfide-copper, zinc sulfide·gold·aluminum, yttrium vanadate·europium, sulfated yttrium·terbium, sulfated lantern·terbium, and the like. The organic fluorescent substances include diaminostilbene disulfonic acid derivatives, imidazole derivatives, coumalin derivatives, derivatives of triazole, carbazole, pyridine, naphthalic acid, imidazolone, and the like, fluorescein, eosin, and the like.

Alternately, the pattern layer 542 may be formed of a pattern-shaped metal thin film. Examples of the metal thin film that can be used include metals of Cr, Ti, Fe, Co, Ni, Cu, Ag, Au, Ge, Al, Mg, Sb, Pb, Pd, Cd, Bi, Sn, Se, In, Ga, Rb, and the like or oxides or nitrides thereof, and Ag is particularly preferred since the metal thin film is close to a mirror surface. A mixture of two or more of the above may be used. For example, the deposition method, the sputtering method, the ion plating method, the plating method, and the like can be applied to the formation of the metal thin film.

Alternately, the absolute refractive index of the first bonding layer 521 may be set to be larger by 0.05 or more than the absolute refractive index of the pattern layer 542. Even in this case, the ink composition 552 may be transparent. Both the first bonding layer 521 and the pattern layer 542 being transparent can make it difficult to sense the presence of the pattern layer 542.

Meanwhile, the self-gathering force or rupture strength of the pattern layer 542 may be large in comparison to the detaching strength of the second boding layer 22 with respect to the first region R1 of the pattern layer 542. In this case, when an attempt is made to detach the hologram laminate 501 from the adherend while attempting to prevent the cohesion failure of the hologram recording layer 11 from occurring, detachment between the pattern layer 542 and the second bonding layer 22 occurs. At this time, since the pattern layer 542 remains on the side of the hologram recording layer 11 detached from the adherend, the image or mirror reflection image of the diffusion and reflection member is recorded when illegal copying is carried out, and illegal copying of the hologram laminate 501 as the original edition can be prevented.

### [Modified example of the fifth embodiment]

Fig. 11C is a schematic cross-sectional view showing another configuration example of the hologram laminate according to the fifth embodiment. As shown in Fig. 11C, the hologram laminate 502 according to the modified example of the fifth embodiment is provided with the hologram recording layer 11, the first bonding layer 521, the pattern layer 542, the base material layer 533, and the second bonding layer 22. In the modified example of the fifth embodiment, the pattern layer 542 is formed on the main surface on the side where the first bonding layer 521 in the base material layer 533 is formed.

In the configuration example in Fig. 11C, for example, the first region R1 of the pattern layer 542 is formed by printing the ink composition 552 in a pattern shape on one main surface on the base material layer 533. The second region R2 is, for example, a region where the ink composition 552 is not printed, and, at this time, the first region R1 of the pattern layer 542 is in a state of being buried in the first bonding layer 521.

When an attempt is made to detach the hologram laminate 502 from an adherend while attempting to prevent the cohesion failure of the hologram recording layer 11 from occurring, the pattern layer 542 is ruptured in the first region R1. That is, since a part of the ink composition that composes the first region R1 is attached to the hologram recording layer 11 side, it is possible to clearly determine whether the hologram laminate 502 has been detached from the adherend.

Meanwhile, the detaching strength of the first bonding layer 521 with respect to the first region R1 of the pattern layer 542 may be large in comparison to the detaching strength of the pattern layer 542 with respect to the base material layer 533. In this case, when an attempt is made to detach the hologram laminate 502 from an adherend while attempting to prevent the cohesion failure of the hologram recording layer 11 from occurring, detachment between the pattern layer 542 and the base material layer 533 occurs. At this time, since the pattern layer 542 remains on the side of the hologram recording layer 11 detached from the adherend, the image or mirror reflection image of the diffusion and reflection member is recorded when illegal copying is carried out, and illegal copying of the hologram laminate 502 as the original edition can be prevented.

### <6. Modified example>

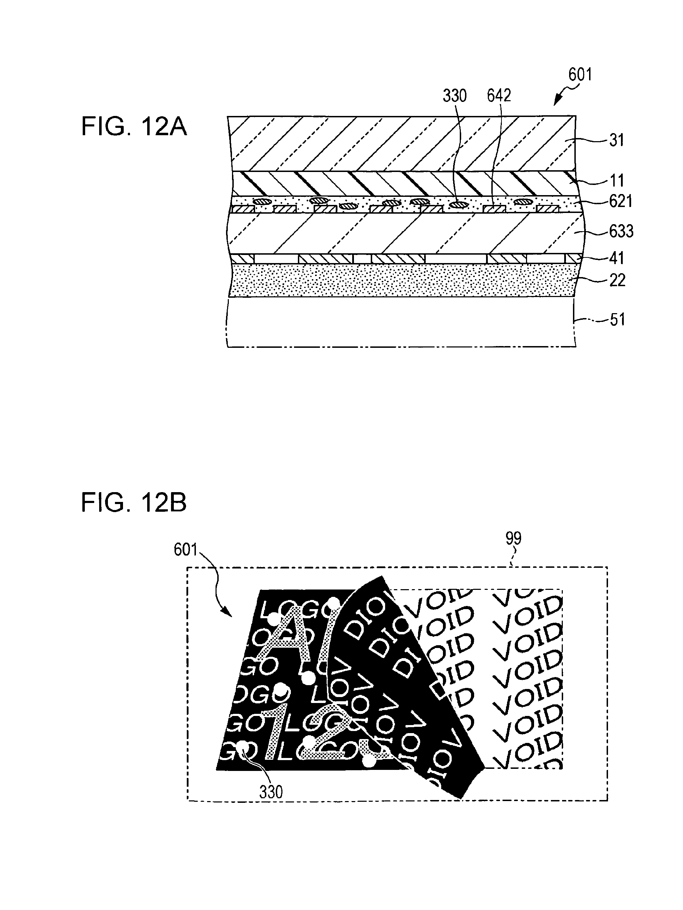

Thus far, the preferred embodiments have been described, but the preferred embodiments are not limited to the above description. The above embodiments are examples having a tamper-evident function either between the first bonding layer and the base material layer or between the base material layer and the second bonding layer, but the above examples may be appropriately combined as shown in, for example, Figs. 12A and 12B.

Fig. 12A is a schematic cross-sectional view of a hologram laminate having a tamper-evident function between the first bonding layer and the base material layer and between the base material layer and the second bonding layer. The hologram laminate 601 shown in Figs. 12A and 12B is provided with the cover film 31, the hologram recording layer 11, the first bonding layer 621, the base material layer 633, the pattern layer 41, and the second bonding layer 22. The pattern layer 642 is formed on one main surface of the base material layer 633 by coating or printing the ink composition. The diffusion and reflection member 330 is dispersed in the first bonding layer 621.

Fig. 12B is a view for explaining the falsification prevention function of the hologram laminate shown in Fig. 12A. A holographic of the information of, for example, "ABCD1234" and the like is recorded in the hologram recording layer 11, and, for example, the manufacturer's logo "LOGO" is formed on one main surface of the base material layer 633 as the pattern layer 642. As shown in Fig. 12B, when the hologram laminate 601 is detached from the adherend 99, the second bonding layer 22 remains in a pattern shape, for example, "VOID" or the like on the adherend 99.

The contents recorded in the hologram recording layer 11 are not particularly limited, and include letter information, image information, and the like. For example, it is also possible to apply the hologram whose reproducing images are changed in accordance with the movement of perspective, which has been suggested by the applicants, or a hologram for which multiple recording is carried out, and reproducing images are converted according to observation angles.

For example, the above embodiments describe examples in which the pattern layer having the first region and the second region is formed so that the detaching strengths of the bonding layer with respect to the first region and the second region are different, but adhesives having different detaching strengths may be used for the regions.

In addition, for example, the above embodiments describe examples in which a hologram recorded in the hologram original edition is reproduced with respect to the first laminate, but it is also possible to supply the first laminate in which a hologram is already recorded. Even in this case, the first laminate having the hologram already recorded may be supplied in a state of being wound in a roll shape.

In addition, for example, the above embodiments describe examples in which the second laminate is provided with the first bonding layer; however, instead of the second laminate, the first laminate may be provided with the first bonding layer.

In addition, for example, a hard coating layer may be formed on the surface of the cover film using an energy ray-curable resin and the like, and a blocking layer that prevents chemical attack may be provided in the interface between the hologram recording layer and other layers.

The hologram laminate can be used in wrapping of products, non-contact IC cards, ID cards, bank cards, credit cards, employee IDs, student IDs, commuter passes, driving licenses, foreign passports, visas, securities, bank books, seals, tickets, mobile phones, currency, jewelry, and the like. In addition, it is possible to use the hologram laminate for proving of non-opening, sealing of alteration-banned places in devices, such as game devices, sealing of important documents, prevention of interfusion of foreign substances into foods or medicines, and the like.

The present disclosure contains subject matter related to that disclosed in Japanese Priority Patent Application JP 2010-260910 filed in the Japan Patent Office on November 24, 2010, the entire contents of which are hereby incorporated by reference.

It should be understood by those skilled in the art that various modifications, combinations, sub-combinations and alterations may occur depending on design requirements and other factors insofar as they are within the scope of the appended claims or the equivalents thereof.

### SUPPORT FOR THE CLAIMS AND FURTHER EMBODIMENTS ARE DEFINED IN THE FOLLOWING ITEMIZED LIST:

1. A hologram laminate, comprising:
   a hologram recording layer in which holograms are recorded;
   a first bonding layer;
   a pattern layer having a first region and a second region;
      and
   a second bonding layer;
   wherein the hologram recording layer, the first bonding layer, the pattern layer, and the second bonding layer are laminated in this order,
   detaching strength of the first bonding layer is larger than detaching strength of the second bonding layer, and
   the detaching strength of the second bonding layer with respect to the first region and the detaching strength of the second bonding layer with respect to the second region are different.
2. A hologram laminate, comprising:
   a hologram recording layer in which holograms are recorded;
   a first bonding layer;
   a pattern layer having a first region and a second region; and
   a second bonding layer;
   wherein the hologram recording layer, the first bonding layer, the pattern layer, and the second bonding layer are laminated in this order,
   detaching strength of the first bonding layer with respect to the hologram recording layer is larger than the detaching strength of the first bonding layer with respect to the first region of the pattern layer, and
   the detaching strength of the first bonding layer with respect to the first region of the pattern layer is larger than the self-gathering force or rupture strength of the pattern layer.
3. The hologram laminate according to Item 1,
   wherein the first bonding layer is an ultraviolet-curable resin.
4. The hologram laminate according to Item 3, further comprising a base material layer,
   wherein the pattern layer is formed on at least one main surface of the main surfaces of the base material layer.
5. The hologram laminate according to Item 4,
   wherein the second bonding layer is black.
6. The hologram laminate according to Item 5,
   wherein the first bonding layer includes a diffusion and reflection member.
7. The hologram laminate according to Item 5,
   wherein the base material layer includes a diffusion and reflection member.
8. The hologram laminate according to Item 4,
   wherein the base material layer has patterned optical anisotropy.
9. The hologram laminate according to Item 2,
   wherein the first region is formed by coating or printing an ink composition.
10. The hologram laminate according to Item 9,
   wherein the ink composition includes particles that reflect light.
11. The hologram laminate according to Item 9,
   wherein the absolute refractive index of the first bonding layer is larger by 0.05 or more than the absolute refractive index of the first region.
12. A method of manufacturing a hologram laminate, comprising:
   joining a first laminate provided with a hologram recording layer in which holograms are recorded and a second laminate provided with a first bonding layer, a pattern layer having a first region and a second region, and a second bonding layer, in which the first bonding layer, the pattern layer, and the second bonding layer are laminated in this order, by the first bonding layer,
   wherein detaching strength of the first bonding layer is larger than detaching strength of the second bonding layer, and the detaching strength of the second bonding layer with respect to the first region and the detaching strength of the second bonding layer with respect to the second region are different.
13. The method of manufacturing a hologram laminate according to Item 12,
   wherein the first laminate is further provided with a cover film, and is supplied in a state in which the cover film and the hologram recording layer are laminated in advance.
14. The method of manufacturing a hologram laminate according to Item 12, further comprising recording a hologram in the hologram recording layer,
   wherein the hologram recording and the joining are configured to be inline.
15. The method of manufacturing a hologram laminate according to Item 12, further comprising:
   forming the hologram recording layer in which the hologram recording layer is formed by coating a photosensitive material on a cover film; and
   recording a hologram in which the hologram is recorded in the hologram recording layer,
   wherein the hologram recording layer forming, the hologram recording, and the joining are configured to be inline.
16. A method of manufacturing a hologram laminate, comprising:
   joining a first laminate provided with a hologram recording layer in which holograms are recorded; and
   a second laminate provided with a first bonding layer, a pattern layer having a first region and a second region, and a second bonding layer, in which the first bonding layer, the pattern layer, and the second bonding layer are laminated in this order, by the first bonding layer,
   wherein detaching strength of the first bonding layer with respect to the hologram recording layer is larger than the detaching strength of the first bonding layer with respect to the first region of the pattern layer, and
   the detaching strength of the first bonding layer with respect to the first region of the pattern layer is larger than the self-gathering force or rupture strength of the pattern layer.
17. The method of manufacturing a hologram laminate according to Item 16,
   wherein the first laminate is further provided with a cover film, and is supplied in a state in which the cover film and the hologram recording layer are laminated in advance.
18. The method of manufacturing a hologram laminate according to Item 16, further comprising: recording a hologram in the hologram recording layer,
   wherein the hologram recording and the joining are configured to be inline.
19. The method of manufacturing a hologram laminate according to Item 16, further comprising:
   forming the hologram recording layer in which the hologram recording layer is formed by coating a photosensitive material on a cover film, and
   recording a hologram in which the hologram is recorded in the hologram recording layer,
   wherein the hologram recording layer forming, the hologram recording, and the joining are configured to be inline.

## Claims

1. A hologram laminate, comprising:
a hologram recording layer in which holograms are recorded;
a first bonding layer;
a pattern layer having a first region and a second region;
and
a second bonding layer;
wherein the hologram recording layer, the first bonding layer, the pattern layer, and the second bonding layer are laminated in this order,
detaching strength of the first bonding layer is larger than detaching strength of the second bonding layer, and
the detaching strength of the second bonding layer with respect to the first region and the detaching strength of the second bonding layer with respect to the second region are different.

2. A hologram laminate, comprising:
a hologram recording layer in which holograms are recorded;
a first bonding layer;
a pattern layer having a first region and a second region;
and
a second bonding layer;
wherein the hologram recording layer, the first bonding layer, the pattern layer, and the second bonding layer are laminated in this order,
detaching strength of the first bonding layer with respect to the hologram recording layer is larger than the detaching strength of the first bonding layer with respect to the first region of the pattern layer, and
the detaching strength of the first bonding layer with respect to the first region of the pattern layer is larger than the self-gathering force or rupture strength of the pattern layer.

3. The hologram laminate according to Claim 1, wherein the first bonding layer is an ultraviolet-curable resin.

4. The hologram laminate according to Claim 3, further comprising a base material layer,
wherein the pattern layer is formed on at least one main surface of the main surfaces of the base material layer.

5. The hologram laminate according to Claim 4, wherein the second bonding layer is black.

6. The hologram laminate according to Claim 5, wherein the first bonding layer includes a diffusion and reflection member, or the base material layer includes a diffusion and reflection member.

7. The hologram laminate according to anyone of Claims 4 to 6,
wherein the base material layer has patterned optical anisotropy.

8. The hologram laminate according to Claim 2, wherein the first region is formed by coating or printing an ink composition.

9. The hologram laminate according to Claim 8, wherein the ink composition includes particles that reflect light.

10. The hologram laminate according to anyone of Claims 8 or 9,
wherein the absolute refractive index of the first bonding layer is larger by 0.05 or more than the absolute refractive index of the first region.

11. A method of manufacturing a hologram laminate, comprising:
joining a first laminate provided with a hologram recording layer in which holograms are recorded and a second laminate provided with a first bonding layer, a pattern layer having a first region and a second region, and a second bonding layer, in which the first bonding layer, the pattern layer, and the second bonding layer are laminated in this order, by the first bonding layer,
wherein detaching strength of the first bonding layer is larger than detaching strength of the second bonding layer, and the detaching strength of the second bonding layer with respect to the first region and the detaching strength of the second bonding layer with respect to the second region are different.

12. A method of manufacturing a hologram laminate, comprising:
joining a first laminate provided with a hologram recording layer in which holograms are recorded; and
a second laminate provided with a first bonding layer, a pattern layer having a first region and a second region, and a second bonding layer, in which the first bonding layer, the pattern layer, and the second bonding layer are laminated in this order, by the first bonding layer,
wherein detaching strength of the first bonding layer with respect to the hologram recording layer is larger than the detaching strength of the first bonding layer with respect to the first region of the pattern layer, and
the detaching strength of the first bonding layer with respect to the first region of the pattern layer is larger than the self-gathering force or rupture strength of the pattern layer.

13. The method of manufacturing a hologram laminate according to anyone of Claims 11 or 12,
wherein the first laminate is further provided with a cover film, and is supplied in a state in which the cover film and the hologram recording layer are laminated in advance.

14. The method of manufacturing a hologram laminate according to anyone of Claims 11 to 13, further comprising recording a hologram in the hologram recording layer,
wherein the hologram recording and the joining are configured to be inline.

15. The method of manufacturing a hologram laminate according to anyone of Claims 11 to 13, further comprising:
forming the hologram recording layer in which the hologram recording layer is formed by coating a photosensitive material on a cover film; and
recording a hologram in which the hologram is recorded in the hologram recording layer,
wherein the hologram recording layer forming, the hologram recording, and the joining are configured to be inline.
